Europäisches Patentamt

European Patent Office

Office européen des brevets

(11) Publication number: **0 252 621**
A2

# EUROPEAN PATENT APPLICATION

(21) Application number: 87305241.9

(22) Date of filing: **12.06.87**

(51) Int. Cl.⁴: **C04B 41/87** , H05B 7/12

(30) Priority: 05.07.86 GB 8616450

(43) Date of publication of application:
**13.01.88 Bulletin 88/02**

(84) Designated Contracting States:
AT BE CH DE ES FR GB GR IT LI LU NL SE

(71) Applicant: FOSECO INTERNATIONAL LIMITED
285 Long Acre
Nechells Birmingham B7 5JR(GB)

(72) Inventor: Thompson, Bevan Gerard
4 Lamprey Dosthill
Tamworth Staffordshire, B77 1PF(GB)
Inventor: Cooper, Susan Catherine
2 Tomey Road
Greet Birmingham, B11 2NJ(GB)

(74) Representative: Shaw, Laurence
FOSECO MINSEP INTERNATIONAL LIMITED
Group Patents Department 285 Long Acre
Nechells Birmingham B7 5JR(GB)

(54) **Protection of graphite electrodes.**

(57) Protection of graphite electrodes of electric arc furnaces e.g. for steelmaking, to reduce the loss of graphite by oxidation involves contacting a hot electrode with particulate matter comprising 35 to 70% by weight of refractory filler, 20 to 40% by weight of a graphite-wetting fusible material and 10 to 25% by weight of an oxidisable metal or metalloid. The particulate matter forms an adherent coating on the side of the electrode.

EP 0 252 621 A2

## PROTECTION OF GRAPHITE ELECTRODES

The present invention concerns protection of graphite electrodes, particularly for electric arc furnaces, from oxidation and compositions for this purpose.

Graphite electrodes are used in the electric arc steel-making process and during the process substantial loss of graphite from the electrodes occurs not only from the tip of the electrodes i.e. in the arc zone but also to a considerable extent from the side of the electrode by oxidation.

Graphite for electrodes for electric arc steel-making furnaces is expensive and over many years there have been numerous proposals to provide protective matter on the side of the electrode to reduce loss of graphite by oxidation. British patent specification I386611 describes applying a powder mixture to a hot electrode to form a protective coating. The powder mixture comprises a graphite-wetting, matrix material having a melting point below I000°C and a refractory filler. The matrix material fuses on the hot electrode to form an adherent continuous coating and the protection provided by this is enhanced by the additional presence of the refractory filler in the coating. The filler has the important property of increasing the viscosity of the fused matrix material so that the coating does not drip off the electrode in use and yet the coating retains a degree of fluidity/plasticity over a wide temperature range thereby enabling it to survive substantial temperature fluctuations without cracking.

European patent publication 0070I00 describes a development from the invention in British patent specification I386II involving, instead of the powder mixture, particles individually comprising both graphite-wetting, fusible matrix material and refractory filler. This invention yields certain advantages over the use of the powder mixture and is in use in a considerable number of countries.

In the method described above the composition is applied to the electrode when the latter is hot following a period of use in the furnace and it has been partly or wholly withdrawn from the furnace. When the hot electrode is withdrawn from the furnace, its lower part is very much hotter than its upper part and this imposes certain limitations on the application of the coating composition. In particular, the cooler part of the electrode may be insufficiently hot to cause fusion of the fusible material and formation of an adherent coating whilst the hotter part of the electrode may be so hot that, although a coating is temporarily formed, it is so fluid that it does not adhere well to the electrode. These limitations cannot be overcome simply by varying the nature and/or porportion of the fusible material and/or the refractory filler because such a variation giving a benefit in relation to the cooler part of the electrode would give a corresponding disadvantage in relation to the hotter part of the electrode and vice versa.

According to the present invention a method of protecting an electric arc furnace graphite electrode with particulate matter comprising 35-70% by weight of a refractory filler, 20-40% by weight of a graphite-wetting, fusible material and I0-25% by weight of a metal or metalloid oxidisable to a refractory oxide whilst the electrode is at an elevated temperature such that the metal or metalloid oxidises and the matter forms a coating adhereing to the side of the electrode.

It is preferred that a metal rather than a metalloid should be used and the preferred metal is aluminium. The metal or metalloid may be in the form of an alloy. Of the metalloids silicon is preferred and may be used as such or, for example, in the form of ferrosilicon.

If the proportion of the fusible material in the particulate matter is below the stated minimum, a strongly adherent coating is not formed whilst, if the porportion is above the stated maximum, there is a significant tendency for the matter applied to run off the electrode in use. If the proportions of filler and oxidisable matter are outside the stated ranges, a strongly adherent coating providing effective protection against oxidation is not obtained.

The particulate matter, containing e.g. aluminium, used in the method of the invention enables a suitable coating to be formed by application of the matter to the electrode over an extended range of electrode temperatures. The ability to apply a suitable coating over an extended temperature range means that a larger proportion of the length of the electrode can be given an effective coating and thus the electrode better protected. The particulate coating matter (containing no aluminium, or similar matter) in accordance with European patent publication 0070I00 used in practice cannot be applied satisfactorily at electrode temperatures below about 600°C nor above about I200°C. In contrast, the method of the present invention can be used in the case of electrode temperatures as low as about 400°C or as high as about I500°C. The ability to obtain a useful coating in the case of electrode temperatures significantly higher than I200°C is particularly advantageous.

At low electrode temperatures e.g. 400°C it is thought the oxidisable matter e.g. aluminium undergoes little chemical reaction e.g. oxidation to alumina but the absence of such a reaction does not prevent the formation of an effective, strongly adherent coating. When in due course, in use of the electrode, the coating is subjected to high temperatures it is thought that the oxidisable matter oxidises and may react with the fusible material and again an effective strongly adherent coating results.

It is thought that the reason why the method of the invention is applicable even at high electrode temperature e.g. 1400°C may be that at such temperatures the oxidisable matter oxidises and reacts with the fusible material, rather than simply oxidising to a refractory oxide, to give a sintered network in which both the filler and fusible material are distributed. In contrast to a coating of filler distributed in a matrix of fused matter, such a coating is less liable to become detached from the electrode at high temperatures. In any event it appears that the oxidisable matter e.g. aluminium does not function simply as a source of e.g. alumina as such because if alumina is used as the filler the adhesion of the coating at 1400°C is not as good as if the filler is the preferred one, silicon carbide.

If the oxidisable matter is aluminium and the fusible material is boron oxide (which, as described hereafter is the preferred fusible material), a reaction does take place at high temperatures, to form the double oxide 9 $Al_2O_3.2B_2O_3$ which has a far higher melting point than boron oxides but which sinters at high temperatures.

In the method of the invention the contacting of the side of the hot electrode with the particulate matter is preferably effected by spraying the particulate matter. The spraying may be carried out using apparatus having some or all the features of the electrode spraying apparatus described in European patent publication 0070100.

As indicated above, the refractory filler in the particulate matter used in the method of the invention is preferably silicon carbide but other refractory carbides may be used e.g. tungsten, boron and zirconium carbides. Other examples of the wide variety of refractory fillers that may be used are refractory oxides e.g. chromic oxide, magnesium oxide, zirconium oxide and titanium oxide, aluminosilicates, nitrides e.g. boron and silicon nitrides, silicides and borides e.g. titanium and zirconium borides.

The graphite-wetting fusible material is preferably a boron compound or a boron-containing glass. In order for the method to be suitable for low electrode temperatures the fusible material should fuse at low temperatures and in order to be suitable for high electrode temperatures the fusible material should not be unduly volatile at such temperatures. Boron oxide, having a melting point of about 300°C, is particularly preferred as the fusible compound.

According to the invention particulate matter for protecting an electric arc furnace graphite electrode comprises 35 to 70% by weight of refractory filler, 20 to 40% by weight of the fusible material and 10 to 25% by weight of a metal or metalloid.

The particulate matter may be used in the form of a powder mixture. Alternatively, in order to minimise any segregation of the particles during or prior to application, the ingredients may be formed into composite particles or granules. The powdery ingredients may be formed into composite granules using a variety of known granulation processes and apparatus but it is preferred to effect the granulation by use of a small proportion of a liquid granulating medium.

EXAMPLE I

A powdery mixture particularly suitable for use in the method of the invention is as follows:

silicon carbide 50% by weight
boron oxide 35% by weight
aluminium 15% by weight

Experimental tests have shown that the above composition forms an adherent coating when applied to a graphite article at temperatures of 300°C, 800°C, 1200°C, 1400°C and 1500°C.

EXAMPLE II

The mixture described in Example I above was used as a protective coating on a hot arc furnace graphite electrode. The mixture was applied to the electrode over the portion of the electrode having a temperature within the range of 400°C to 1300°C and gave an adherent coating on the electrode. In this test owing to the manner in which the furnace was operated the maximum temperature of the electrode at its tip when the coating was applied was 1300°C. However, it should be appreciated that operating the same furnace in a different manner would result in a tip temperature as high as 1500°C for which a similar good result would be obtained.

EXAMPLE III

Example I was repeated except that the proportion of aluminium was replaced by ferrosilicon. In this case experimental tests showed that this composition formed an adherent coating when applied to a graphite article at temperatures between 400°C and 1300°C.

## Claims

1. Particulate matter for the protection of graphite electrodes characterised in that the particulate matter comprises 35 to 70% by weight of refractory filler, 20 to 40% by weight of a graphite-wetting, fusible material and 10 to 25% by weight of an oxidisable metal or metalloid.

2. Particulate matter according to claim 1 characterised in that the oxidisable metal is aluminium.

3. Particulate matter according to claim 1 characterised in that the oxidisable metalloid is selected from silicon or ferrosilicon.

4. Particulate matter according to any one of claims 1 to 3 characterised in that the refractory filler comprises at least one refractory metal, oxide, carbide, nitride, silicide or boride or refractory silicate.

5. Particulate matter according to any one of claims 1 to 4 characterised in that the graphite-wetting fusible material is a boron compound or a boron-containing glass.

6. Particulate matter according to claim 5 characterised in that the graphite-wetting fusible material is boron oxide.

7. Particulate matter according to any one of claims 1 to 6 characterised in that the matter is in the form of a powder mixture.

8. Particulate matter according to any one of claims 1 to 6 characterised in that the matter is in the form of granules.

9. A method of protecting a graphite electrode which comprises contacting the side of the electrode with particulate matter characterised in that the particulate matter comprises 35 to 70% by weight of refractory filler, 20 to 40% by weight of a graphite-wetting, fusible material and 10 to 25% by weight of a metal or metalloid oxidisable to a refractory oxide whilst the electrode is at an elevated temperature such that the metal or metalloid oxidises and the matter forms a coating adhering to the side of the electrode.

10. A method according to claim 9 characterised in that the elevated temperature of the electrode is between 300°C and 1500°C.